(19) Europäisches Patentamt

European Patent Office

Office européen des brevets

(11) Publication number : **0 444 987 B1**

(12) **EUROPEAN PATENT SPECIFICATION**

(45) Date of publication of patent specification :
18.08.93 Bulletin 93/33

(51) Int. Cl.⁵ : **C10K 3/02**

(21) Application number : **91400307.4**

(22) Date of filing : **08.02.91**

(54) **Process for purifying high-temperature reducing gases and composite power plant with coal gasification.**

(30) Priority : **09.02.90 JP 31184/90**
**23.02.90 JP 41114/90**

(43) Date of publication of application :
**04.09.91 Bulletin 91/36**

(45) Publication of the grant of the patent :
**18.08.93 Bulletin 93/33**

(84) Designated Contracting States :
**AT BE DE FR GB IT NL SE**

(56) References cited :
**EP-A- 0 311 932**
**FR-A- 2 101 724**
**GB-A- 992 161**
**US-A- 4 572 829**

(73) Proprietor : **MITSUBISHI JUKOGYO KABUSHIKI KAISHA**
**5-1, Marunouchi 2-chome Chiyoda-ku Tokyo (JP)**

(72) Inventor : **Ogawa, Kiichiro, c/o Mitsubishi Jukogyo K. K.**
**5-1, Marunouchi 2-chome, Chiyoda-ku Tokyo (JP)**
Inventor : **Suehiro, Mitsugi, c/o Mitsubishi Jukogyo K. K.**
**5-1, Marunouchi 2-chome, Chiyoda-ku Tokyo (JP)**
Inventor : **Izumi, Jun, c/o Nagasaki Technical Institute**
**Mitsubishi Jukogyo K. K., 1-1, Akunoura-machi Nagasaki, Nagasaki Pref. (JP)**
Inventor : **Seto, Toru, c/o Hiroshima Technical Institute**
**Mitsubishi Jukogyo KK 6-22 Kanonshin-machi 4-chome**
**Nishi-ku, Hiroshima, Hiroshima Pref. (JP)**
Inventor : **Mitsuoka, Shigeaki, c/o Hiroshima Technical Inst.**
**Mitsubishi Jukogyo KK 6-22 Kanonshin-machi 4-chome**
**Nishi-ku, Hiroshima, Hiroshima Pref. (JP)**

(74) Representative : **Rodhain, Claude et al**
**Cabinet Claude Rodhain 30, rue la Boétie F-75008 Paris (FR)**

EP 0 444 987 B1

Jouve, 18, rue Saint-Denis, 75001 PARIS

## Description

The present invention relates to a process for purifying high-temperature reducing gases, such as the product gas from coal gasification etc., by employing a simultaneous adsorptive removal of carbon dioxide and sulfur compounds in dry system under conversion of carbon monoxide into hydrogen and carbon dioxide.

The above process for purifying high-temperature reducing gases can be applied, for example, in multipurport integrated coal gasification plants for effecting power generation together with production of gaseous raw materials, such as, hydrogen, chemical raw materials for the production of methanol etc.; in integrated heavy oil gasification combined cycle power generation plants ; and so on.

Thus, the present invention relates also to integrated coal gasification combined cycle (IGCC) power generation plants, in which the above process for purifying high-temperature reducing gases is employed.

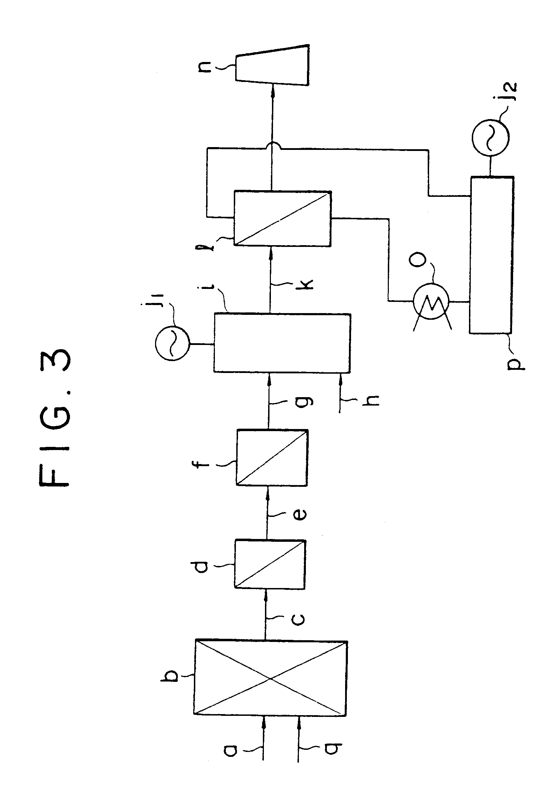

In conventional multipurport gasification-power generation integrated plants for producing various product gases, such as, methane, methanol, ammonia and so on, by gasifying heavy oils, coal, natural gas etc., removal of extraneous gases, such as, carbon dioxide ($CO_2$), hydrogen sulfide ($H_2S$) and so on, has been incorporated in wet system. There has been proposed no practical use of dry purification system. A typical flow diagram of such conventional IGCC power plants is given in the appended Fig. 3.

Finely pulverized coal $\underline{a}$ is supplied together with a gasifying agent (air or oxygen) $\underline{q}$ to a coal gasifier furnace $\underline{b}$ to produce a combustible gas $\underline{c}$ composed mainly of carbon monoxide (CO) and hydrogen ($H_2$). The combustible gas $\underline{c}$ contains extraneous substances, such as, fly ash, incombustible char, sulfur compounds, such as, hydrogen sulfide ($H_2S$), carbonyl sulfide (COS) etc. To remove such extraneous substances, the combustible gas $\underline{c}$ is passed through a dust remover $\underline{d}$ and the thus dust-removed gas $\underline{e}$ is desulfurized by a desulfurizer $\underline{f}$ to obtain a purified product gas $\underline{g}$. The sulfur compounds removed in the desufurizer $\underline{f}$ is treated so as to convert them into elementary sulfur which is recovered. The product gas $\underline{g}$ is supplied as the fuel gas to the burner of a gas turbine $\underline{i}$ for driving a power generator $\underline{j_1}$. The exhaust gas $\underline{k}$ from the gas turbine $\underline{i}$ is passed to a waste heat boiler $\underline{l}$ to recover the waste heat by generating steam for a steam turbine $\underline{p}$ installed with a steam condenser $\underline{o}$ for driving a power generator $\underline{j_2}$, before it is discharged into the atmosphere from chimney $\underline{n}$

Such a IGCC power plant produces a pressurized high-temperature reducing gas having a considerable heat of combustion and containing substantially no harmful component, which can thus be utilized for an efficient power generation. Here, however, the exhaust gas from the chimney contains all of $CO_2$ resulting from the coal gasification in the gasifier and from the combustion of CO in the burner. No special consideration as to recovering or putting $CO_2$ aside of environmental hazard has been made.

It has in recent years been emphasized to cope with the requirement of taking a countermeasure against "greenhouse effect" and global climatic changes due to increase in the $CO_2$ concentration in the atmosphere.

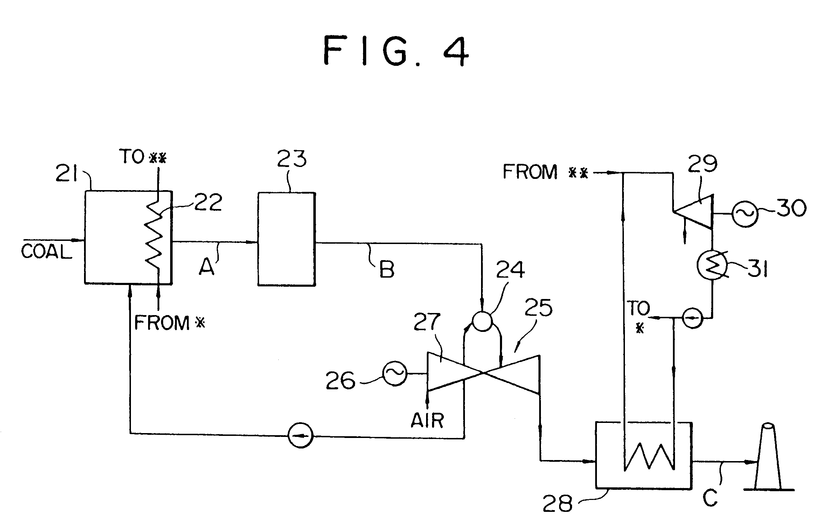

Explaining such a stand of the technique by reference to the appended Fig. 4 illustrating a typical arrangement of conventional IGCC power plant by a more specific flow diagram, finely pulverized coal is supplied to a coal gasifier (21) and is gasified by air at a high pressure and high temperature into a combustible coal gas composed mainly of CO, $H_2$ and $N_2$. The coal gas is cooled by a gas cooler (22) consisting of a group of heat exchangers whereby a heat recovery steam is generated by the sensible heat of the coal gas, which is utilized in a recovery power generation unit. The coal gas from the gasifier contains useless and harmful substanses of, for example, solid particles, such as, fly ash and incombustible char, and sulfur-containing gases, such as, $H_2S$, COS and so on. To remove these harmful substances, it is passed through a gas purifier (23) composed of a dust remover and a desulfurizer. The resulting purified product gas is supplied to a combustor (24). The combustion gas from the combustor (24) is conducted to a gas turbine (25) for driving a power generator (26) and an air compressor (27) for the combustion air. The turbine exhaust gas has still a high enthalpy which is recovered through a waste heat boiler (28) to generate a steam for driving a steam turbine (29) of a power generator (30) with a steam condenser (31), before it is discharged out of the chimney. The heat recovery steam generated in the gas cooler (22) mentioned above is utilized here for supplementing the supply steam for the steam turbine (29).

As seen, conventional IGCC power plants were designed exclusively for seeking a high efficiency and high performance of the plant and no special consideration had been paid for the removal of $CO_2$ in the exhaust gas. This applies also for the integrated heavy oil gasification combined cycle power plants.

The composition of the coal gas from the coal gasifier (21) at the position A of the plant shown in Fig. 4 is, for example, as given in Table 1 below. Since the coal gas has a considerably high content of solid matters, such as, incombustible char, fly ash and so on, and high level of $SO_x$ concentration not permitted to meet the requirement for environmental protection, it has to be subjected to purification in the gas purifier (23) by dust removal and desulfurization.

While there had been proposed in the practice a combined gas purification apparatus in wet system, in which dust removal with a water scrubber operated at around the ordinary temperature (below 100 °C ) and wet desulfurization with a chemical absorption liquid are combined, a dry system has heretofore been employed in the point of view of improvement of thermal efficiency, since it has been accepted as advantageous for power generation. The dry system gas purifier consists in dry dust removal and dry desulfurization at a high temperature in the range from 300 to 800 °C without employing any absorbing liquid. The desulfurization is effected using a fixed bed method with an iron oxide absorbent. A typical composition of the gas at the position indicated by $\underline{B}$ in Fig. 4 after passing through such a dry gas purifier (23) is, for example, as given also in Table 1. A typical composition of the exhaust gas of the waste heat boiler (28) at the position indicated by C in Fig. 4 is as given also in Table 1.

Table 1

| Position in Fig. 4 | | A | B | C |
|---|---|---|---|---|
| Gas Temperature ( °C )<br>Gas Pressure (atm abs.) | | 400~ 450<br>20 ~ 25 | 400~ 450<br>20 ~ 25 | 100~ 130<br>1.03 |
| Gas Composi- tion (Volume %) | CO<br>$CO_2$<br>$H_2$<br>$H_2O$<br>$N_2$ etc. | 25.7<br>3.4<br>11.1<br>3.2<br>56.6 | 25.2<br>3.6<br>10.9<br>3.5<br>56.8 | 0<br>7.7<br>0<br>4.9<br>87.4 |
| Heat. Value (Kcal/Nm³ )<br>Dust Cont. (mg/Nm³ )<br>Sulfur Compounds (ppm) | | ≒ 1100<br>3000<br>≒ 1000 | ≒ 1100<br>10~ 30<br>< 100 | 0<br>< 10<br>< 50 |

If a $CO_2$ removal unit is incorporated in the conventional IGCC power plant as explained above, the following problems will occur:

In the case of installation of a dry $CO_2$ removal unit in the gas line after the exit of the waste heat boiler (28), a larger $CO_2$ removal unit must be employed regardless of the type of the $CO_2$ removal unit, since the exhaust gas volume from a gas turbine amounts in general to about two-fold of that from a pulverized coal fired boiler. Moreover, an insertion of an extraneous installation in the gas line after the gas turbine exit will bring about a decrease in the power output and lowering of the performance of the gas turbine (25) due to increase of the exhaust back pressure of the gas turbine.

In the case of installation of a dry $CO_2$ removal unit in the gas line between the gasifier (21) and the gas turbine (25), an efficient $CO_2$ removal may be attained, since the volume of the gas to be treated may in general be about 1/4 of the volume of the gas turbine exhaust at a high pressure of 20 - 40 atm. Here, however, an essential increase in the over-all $CO_2$ removal efficiency may not be expectable, since the proportion of $CO_2$ amounts in general to about 20 - 25 % of the total carbonaceous gas components for air-flowing system. In addition, some decrease in the power output of the gas turbine (25) in correspondence to the amount of $CO_2$ removed.

In the case of oxygen-blown coal gasification plant employing oxygen or an oxygen-enriched air as the gasifying agent, the heating value per gas volume of the coal gas (or the purified product gas ) is increased ( about 2500 Kcal/Nm³), so that the volume of the product gas may amount to about two-fold of that of air-flowing. Here also, the essential problem of $CO_2$ removal from the chimney gas is yet not solved.

In the case of oxygen-flowing, an additional disadvantage of requirement of installation of oxygen plant is brought about.

In the IGCC power plants of the prior art, the removal of $CO_2$ may be effected in the gas line directly after the coal gasifier exit or in the gas line after the waste heat boiler exit (in the stack gas). The former can be attained economically with a compact apparatus with lower energy consumption, since the volume of the gas to be treated may be 1/2 or less of the latter. Here however, as explained previously, almost all of the carbonaceous gas components (CO, $CO_2$ etc.) is CO, with $CO_2$ content being in general below 5 %. In designing the IGCC power plant with installation of $CO_2$ removal in this location, nearly the entire CO content may be converted into $CO_2$ and $H_2$ by reacting it with steam ($H_2O$).

For realizing this plant design, the so-called CO-shift reaction of the reaction scheme (1)

EP 0 444 987 B1

$$CO + H_2O \rightarrow CO_2 + H_2 \quad (1)$$

may be employed. In practicing this, control of the amount of $H_2O$ to be injected into the reaction system and of gas temperature during the reaction for effective preservation of the catalyst activity and so on should be designed concretely.

Incorporation of an wet system, such as wet absorption with monoethanolamine proposed previously in a multipurport integrated plant may not be practical, since the decrease in the gas temperature upon wet $CO_2$ removal obstructs the employment of gas turbine power generator.

Thus, according to the present invention, a dry $CO_2$ removal is employed. Here, it may be practical to employ the so-called "pressure swing adsorption" (PSA) with a molecular sieve adsorbent for a simultaneous adsorption of $CO_2$ and sulfur compounds, such as $H_2S$ etc. In an adsorption technique, in general, the lower the adsorption temperature, the higher will be the adsorption efficiency. However, a IGCC power plant should operate at a temperature as high as possible, in order to achieve a high energy efficiency of the plant.

In order to dispose of $CO_2$ and $H_2S$ adsorbed on the molecular sieve in PSA unit, these two components should be desorbed separately. It is possible to convert the desorbed $H_2S$ into elementary sulfur (S) by the Claus process. $CO_2$ fixation is possible by disposing thereof into a deep sea or deep earth.

## OBJECT AND SUMMARY OF THE INVENTION

The first object of the present invention is to provide an economical process for purifying high temperature reducing gases which permits to solve the existing problems described above.

The first aspect of the present invention for attaining the above first object resides in a process for purifying high temperature reducing gases by removing sulfur compounds contained in such reducing gases by dry adsorption on adsorbents, which comprises subjecting the high temperature reducing gas to a catalytic CO-shift reaction in a reactor having a corresponding catalyst and equipped with a heat recovery means for controlling the gas temperature while injecting steam into the high temperature reducing gas, in order to convert the content of CO in the high temperature reducing gas into $CO_2$, effecting the removal of sulfur compounds from the gas exhausted from the CO-shift reactor by simultaneous adsorption of them together with $CO_2$ on an adsorbent, while controlling the temperature of the gas using the heat recovery means of the reactor, and separating the thus adsorbed $CO_2$ from the adsorbed sulfur compounds by desorption under control of the temperature and pressure of desorption to recover them.

The second aspect of the present invention resides in a process for purifying high temperature reducing gases according to the above first aspect, which comprises supplying the sulfur compounds separated from $CO_2$ to a Claus process sulfur recovery unit to convert the content of $H_2S$ in the sulfur compounds into elementary sulfur, which is recovered by extracting out of the unit, subjecting the exhaust from the Claus process unit to reduction by the $H_2$ of the product gas to reduce other sulfur compounds and the residual sulfur into $H_2S$ and separating and returning the so formed $H_2S$ to the Claus process sulfur recovery unit, while the rest of the Claus process exhaust is disposed of by, for example, burning.

According to the above first and the second aspects of the present invention, the following practical advantages can be achieved:

(a) By the employment of dry adsorption means for the removal of $CO_2$ and sulfur compounds from a high temperature reducing gas under conversion of the CO content of the gas into $CO_2$, a simultaneous removal of $CO_2$ and the sulfur compounds contained in the reducing gas can be effected with lower energy consumption.

(b) By controlling the amount of injection of $H_2O$ into the high temperature reducing gas for the CO-shift reaction to be the requisite minimum in accordance with each specific required conversion of CO, undesirable influence of $H_2O$ on the installations downstream the reactor can be rendered minimum.

(c) By installing a heat recovery means for controlling the reaction temperature in the CO-shift reactor, a high conversion of CO into $CO_2$ is attained, with simultaneous attainment of protection of the catalyst by maintaining the gas temperature below a determined value of, for example, 500 °C .

(d) All the sulfur compounds separated can be converted into elementary sulfur (S) at a high conversion rate and the separated $CO_2$ can be recovered in a high purity.

(e) The process for purifying the high temperature reducing gases can be applied also for producing chemical raw materials, since a high removal rate is attained both for $CO_2$ and for the sulfur compounds.

The second object of the present invention is to provide a IGCC power plant with coal gasification capable of removing $CO_2$ at a high efficiency with minimum energy loss.

The third aspect of the present invention for achieving the above second object resides in a IGCC power plant having installed a coal gasifier, a gas purifier for removing impurities from the coal gas produced in the coal gasifier, a gas turbine power generation unit having a combustor for combusting the product gas purified

4

in said gas purifier, a waste heat boiler for recovering the sensible heat of the exhaust gas from the gas turbine of said gas turbine power generation unit by generating steam and a steam turbine power generation unit driven by the said steam generated in the waste heat boiler, which IGCC power plant comprises a reactor for converting CO in the gas purified by said gas purifier into $CO_2$ disposed between said gas purifier and said combustor of the gas turbine power generation unit and a dry $CO_2$ removal unit for removing $CO_2$ from the gas leaving said reactor.

According to the above third aspect of the present invention, the purified coal gas from the gas purifier is subjected to Claus reaction under injection of a requisite amount of steam into the gas to convert substantially entire content of CO into $CO_2$ and the resulting product gas is supplied to the combustor of the gas turbine power generation unit after removal of the $CO_2$ content by a dry $CO_2$ removal unit, whereby the following technical advantages are realized:

(a) Substantially all the $CO_2$ formed in the IGCC power plant can be separated from the product gas with scarce power consumption.

(b) The carbonaceous fuel components are converted into $CO_2$ and the so formed $CO_2$ can be separated at a high temperature and high pressure (350 - 500 °C, 20 - 40 atm) easily with a very low energy consumption.

(c) By the removal of $CO_2$ from the product gas before it is combusted in the combustor of the gas turbine, the combustion stability is increased, since the intrinsic fuel component consists thus exclusively of $H_2$.

(d) Upon desorption of $CO_2$, an additional power recovery through a gas expander could be obtained.

(e) Due to the depletion of the sulfur compounds, such as $H_2S$, COS and so on, together with $CO_2$, the thus purified product gas can be utilized for a fuel cell by selecting an adequate adsorbent.

(f) The sulfur compound separator may serve as a support for the gas purifier existing upstream thereof, when the desulfurization performance of the gas purifier is out of order.

## BRIEF DESCRIPTION OF THE DRAWINGS

Fig. 1 is a flow diagram of the system for purifying high temperature reducing gases according to the present invention.

Fig. 2 is a flow diagram of an embodiment of IGCC power plant according to the present invention.

Fig. 3 is a flow diagram of an exemplary IGCC power plant of prior art.

Fig. 4 is a flow diagram of another exemplary IGCC power plant of the prior art.

## DETAILED DESCRIPTION OF PREFERRED EMBODIMENTS

In the above first aspect of the present invention, The CO-shift reactor operates to convert CO contained in the high temperature reducing gas, such as, coal gas, into $CO_2$ according to the reaction scheme (1) under the use of a catalyst. The CO-shift reactor is equipped with a heat recovery means for controlling the temperature of the reaction gas, so that attainment of compact design of the plant and reduction of the energy consumption is permitted.

The CO-shift reaction of reaction scheme (1) is an exothermal reaction (heating value = 9. 83 Kcal/mol ), so that the lower the reaction temperature, the more advantageous will be the reaction in view of the chemical equilibrium. However, for a IGCC power plant, the higher the temperature of the combustion gas, the higher will be the power generation efficiency. Since a catalyst consisting of Fe-Cr, Cu-Zn or Cu-Cr composition is employed for this reaction, a thermal deterioration of the catalyst may be brought about when the temperature of the catalyst bed is high. Thus, the reaction gas temperature at the exit of the reactor may preferably be below about 500 °C on account of the catalyst life. Temperature increase of the reaction gas by the heat evolution due to the exothermal reaction may be controlled by controlling the temperature of the reactor outlet gas by the heat recovery means installed therein. Thus, if the outlet gas temperature exceeds a preset value, for example, 500 °C , the reaction gas temperature within the reactor may be controlled by corresponding operation of the heat recovery means of the CO-shift reactor. Namely, the temperature of the outlet gas of the reactor can be maintained below a determined temperature, for example, 500°C .

The conversion of CO into $CO_2$ can easily be controlled by adjusting the amount of steam injected into the purified coal gas supplied to the CO-shift reactor. By controlling the amount of steam injected so as to correspond to each requisite CO conversion, it is able to minimize the residual $H_2O$ in the outlet gas of the CO-shift reactor, whereby any undesirable influence of $H_2O$ on the installations downstream thereof.

In the simultaneous removal of $CO_2$ and the sulfur compounds from the high temperature reducing gas using a dry adsorption system, such as PSA unit, the adsorbing ability to the adsorbent is higher for $H_2S$ than $CO_2$. The requisite amount of adsorbent can be determined from the designed $CO_2$ concentration in the first aspect of the present invention, since the concentration of $CO_2$ in the gas to be treated is in general about 50- to 500-fold of that of the sulfur compounds.

It is possible to employ two or more adsorbents permissible of simultaneous adsorption of $CO_2$ and of the sulfur compounds or those exhibiting each a high adsorbing ability either to $CO_2$ or to the sulfur compounds respectively.

If the temperature of the outlet gas of the CO-shift reactor is too high, the adsorbing ability to $CO_2$ and $H_2S$ becomes decreased, so that the requisite amount of adsorbent is increased. Therefore, according to the first aspect of the present invention, a heat recovery means is disposed upstream of the unit of dry adsorptive removal of $CO_2$ and the sulfur compounds, in order to decrease the gas temperature while attaining an energy recovery from its sensible heat to control the inlet gas temperature of the dry adsorptive removal unit to, for example, about 250 - 300 °C for effecting a highly efficient adsorption of $CO_2$ and the sulfur compounds.

By removing $CO_2$ and the sulfur compounds, the purified coal gas having the combustible component essentially of $H_2$ is obtained. This coal gas is combusted in the combustor of a gas turbine for power generation exhausting substantially a $CO_2$-free combustion gas, whereby any emission of $CO_2$ into the atmosphere may be prevented.

$CO_2$ and the sulfur compounds removed from the coal gas by, such as, PSA unit, can be separately desorbed by making use of the difference in the adsorbing ability of the adsorbent to the adsorbate between $CO_2$ and the sulfur compounds.".

When employing a PSA unit for removing $CO_2$ and the sulfur compounds from the reducing gas according to the first aspect of the present invention, the relative adsorbing ability of a usual adsorbent is greater to $H_2S$ than to $CO_2$, so that the adsorption will occur first for $H_2S$ and, after the adsorption equillibrium for $H_2S$ has been reached, the adsorption of $CO_2$ will commence. It is therefore important not only to choose an adsorbent having greater adsorbing ability to $H_2S$ but also to control the amount of charge of the adsorbent that adsorbs preferentially $H_2S$. Upon carrying out the adsorption of $CO_2$ and of the sulfur compounds according to the first aspect of the present invention, the sulfur compounds, such as $H_2S$ and so on, can easily be separated in a concentrated form from $CO_2$ by desorbing it from the adsorbent by reducing the pressure up to a determined value, while recovering the desorbed $CO_2$ as a high purity gas.

As described above, the conversion of CO contained in the high temperature reducing gas into $CO_2$ is effected in a CO-shift reactor according to the first aspect of the present invention, wherein control of the conversion of CO can be effected with simultaneous attainment of minimization of the residual amount of $H_2O$ left unreacted in the outlet of the reactor, by adjusting the amount of steam injected into the coal gas to the CO-shift reactor. Here, the shift reaction of CO into $CO_2$ is achieved upstream of the combustor of gas turbine, so that the amount of gas to be subjected to the shift reaction is kept at a minimum with less consumption of the operation energy and a compact arrangement of the installations can also be realized.

The temperature of the reaction gas in the CO-shift reactor can be controlled by means of the heat recovery means of the reactor, so that the CO-shift reaction is effected efficiently at a desirable temperature. In addition, the temperature of the outlet gas of the reactor is thereby reduced to a required level for realizing efficient dry adsorptive removal of $CO_2$ and the sulfur compounds in the reactor outlet gas and easy separative desorption of them from the adsorbent.

Thus, according to the first aspect of the present invention, the removal of $CO_2$ is effected simultaneously with the removal of the sulfur compounds in a dry adsorptive way with scarce energy consumption in purifying high temperature reducing gases.

In the second aspect of the present invention, the sulfur compounds including $H_2S$ removed from the high temperature reducing gases are supplied to a Claus process sulfur recovery unit, in which $H_2S$ is subjected first to a partial oxidation by oxygen followed by conversion into elementary sulfur using a Claus catalyst to recover it as elementary sulfur.

The outlet gas of the Claus sulfur recovery unit contains elementary sulfur, $SO_2$ and unreacted $H_2S$. By cooling the outlet gas of the Claus sulfur recovery unit to a temperature of about 130 - 180°C , gaseous elementary sulfur is liquidized, which is collected as liquid sulfur. The residual gas contains thus $H_2S$, $SO_2$, the rest of gaseous elementary sulfur and entrained sulfur mist. All these sulfur compounds other than $H_2S$ are then subjected to reduction by the hydrogen gas contained in the outlet gas of the claus sulfur recovery unit according to the following reaction schemes (2) and (3):

$$SO_2 + 3H_2 \rightarrow H_2S + 2H_2O \quad (2)$$
$$S + H_2 \rightarrow H_2S \quad (3)$$

These reactions proceed easily using a reducing catalyst based on, for example, Co-Mo, Ni-Mo etc. at a temperature of 200 - 400°C, forming thus $H_2S$ in an amount corresponding to the total amount of sulfur of the reaction original system, whereby substantially all the sulfur in the reduced gas mixture is present in the form of $H_2S$.

The separation of $H_2S$ from other components, such as $N_2$, $CO_2$ and so on is realized by, for example, PSA technique.

The thus separated $H_2S$ is returned to the Claus process sulfur recovery unit to recover it in the form of elementary sulfur, while the gaseous rest remaining after $H_2S$ has been separated, which contains a trace remainder of sulfur compounds such as $H_2S$ and so on, is disposed of into the atmosphere after it has been treated by, for example, burning to convert into $SO_2$.

As described above, the second aspect of the present invention incorporates, in addition to the features of the first aspect of the present invention, a further feature of recovering sulfur comounds left after removal of $H_2S$ by reducing them into $H_2S$ by the hydrogen in the outlet gas of the claus sulfur recovery unit and recirculating it to the unit.

Example 1

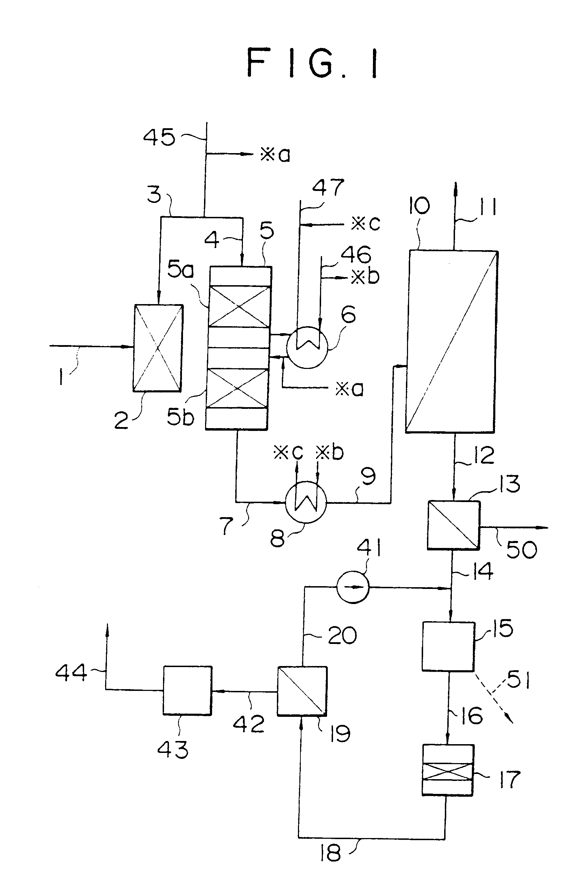

A concrete embodiment corresponding to the first or the second aspect of the present invention is explained with reference to the appended Fig. 1 by way of example.

A high temperature reducing gas 1 consisting of a coal gasifier gas containing gaseous sulfur compounds, such as, $H_2S$, COS and so on, and particulate impurities of fly ash, incombustible char etc. is first treated by dust removal through a dry dust remover 2 operable at high temperatures, such as for example, a ceramic porous filter. A steam required for effecting a CO-shift reaction is injected into the dust-removed gas in a gas line 3 from a steam supply line 45. Thus the dust-removed and wetted reducing gas is supplied via a gas line 4 to a CO-shift reactor 5 having inflow side and outflow side reaction zones 5a and 5b respectively containing each a layer of catalyst based on Fe-Cr, Cu-Zn or Cu-Cr for effecting the conversion of CO and $H_2O$ into $H_2$ and $CO_2$. The reaction gas which has left the reaction zone 5a is conducted to a heat recovery boiler 6, where the gas is cooled to a temperature effective to avoid superheating of the catalyst layer while recovering the reaction heat by generating steam. The gas passed through the heat recovery boiler 6 is then passed to the reaction zone 5b, where a supplemental CO-conversion is effected. By the heat recovery boiler 6, the temperature of the outlet gas of the reactor 5 is maintained at a lower level of not exceeding above 500°C , whereby a thermal deterioration of catalyst activity can be prevented with smooth conduction of the conversion reaction.

The gas 7 leaving the CO-shift reactor, of which combustible fuel component consists now essentially of hydrogen with scarce residual content of CO, is then supplied to a dry adsorptive removal unit 10 through a heat recovery boiler 8 and via a line 9 for removing $CO_2$ and the sulfur compounds. The dry adsorptive removal unit consists of a dry adsorption apparatus filled with an adsorbent for adsorbing $CO_2$ and sulfur compounds and operable on a basis of dry PSA technique. $CO_2$ and the sulfur compounds contained in the gas leaving the CO-shift reactor are adsorbed on the adsorbent at a high efficiency and are thus removed from the gas at an adsorption temperature reduced to 250 - 300°C by the heat recovery boiler 8.

The purified gas thus freed from $CO_2$ and sulfur compounds delivered from the gas line 11 is now ready for use as the fuel for a gas turbine (not shown).

By the low content of carbonaceous component in the purified gas, emission of $CO_2$ into the atmosphere upon combustion of this product gas in a gas turbine is substantially avoided.

The adsorbent substantially saturated with the adsorbed $CO_2$ and the sulfur compounds removed from the gas is then regenerated by desorbing these adsorbates. The desorption gas containing $CO_2$ and sulfur compounds at high concentration discharged from the adsorption unit 10 is supplied to a $CO_2$ separator 13 composed of an adsorption bed filled with an adsorbent with higher adsorbing ability to sulfur compounds than $CO_2$ and operable by the PSA technique. $CO_2$ is separated from the separator 13 while the sulfur compounds are retained adsorbed on the adsorbent, whereby separation of $CO_2$ in a highly pure state is attained under recovery thereof via a delivery line 50. The sulfur compounds are then desorbed from the $CO_2$ separator 13 and the desorption gas having a high $H_2S$ content is supplied via a supply line 14 to a Claus sulfur recovery unit 15, where it is converted into elementary sulfur which is recovered as liquid sulfur outside the unit via a discharge line 51.

The outlet gas of the Claus sulfur recovery unit 15 is supplied via a supply line 16 to a tail gas reducing reactor 17 filled with a reduction catalyst based on Co-Ni, Ni-Mo or so on, where the sulfur compounds other than $H_2S$ are reduced by the hydrogen in the gas into $H_2S$. The gas leaving the reducing reactor 17 through a delivery line 18 is conducted to a $H_2S$ separator 19 operative in a similar manner as the $CO_2$ separator 13, where the gas is separated into an $H_2S$-rich gas 20 and a remainder gas 42. The $H_2S$-rich gas 20 is returned to the Claus sulfur recovery unit 15 after it has been compressed to the pressure of Claus sulfur recovery unit by a blower 41, while the remainder gas 42 is disposed of into the atmosphere via a discharge line 44 after burning any combustible component therein into oxide.

The heat recovery boiler 6 serves for adjusting the temperature of the catalyst layer of the follower reaction

7

zone 5b on realizing the CO-shift reaction in two stages and has a feed line 46 for the boiler feed water and a steam delivery line 47.

From the steam supply line 45, a line $\underline{a}$ is branched to inject the steam into the coal gas entering the CO-shift reactor 5. The boiler feed line 46 is branched to a feed line $\underline{b}$ for another heat recovery boiler 8, of which steam generated is joined to the steam delivery line 47 via a line $\underline{c}$.

As described in Example 1 above, it is attained to substantially reduce the amount of $CO_2$ discharged from gas turbine into the atmosphere with simultaneous prevention of emission of sulfur compounds, by converting the essential portion of CO contained in high temperature reducing gasses into $CO_2$ and removing the substantial portion of $CO_2$ by dry adsorption on an adsorbent together with sulfur compounds under recovery of them in a pure utlizable form.

In addition, employment of gas turbine for power generation is advantageous as compared to the use of conventional pulverized coal fired boiler as to the removal of $CO_2$, in view of the fact that the amount of exhaust gas from the coal gasifier for producing gas turbine fuel gas amounts to about 1/2, in the case of air-flowing and to about 1/4, in the case of oxygen-flowing, of the amount of exhaust gas from the pulverized coal fired boiler.

In the operation of CO-shift reactor 5, a shift reaction at a temperature which is lower enough to prevent a high temperature deterioration of the shift reaction catalyst but does not substantially decrease the heat efficiency of the IGCC power plant can be realized with efficient shift reaction of $CO \rightarrow CO_2$.

The sulfur compounds and $CO_2$ separated from the coal gas are recovered in a pure and utilizable form as elementary sulfur and pure $CO_2$ gas.

The remainder gas 42 having scarce content of residual $H_2S$ from the $H_2S$ separator 19 is disposed of into the atmosphere, after it has been treated into a practically innoxious form by, for example, burning in an incinerator 43.

The experimental data obtained in Example 1 above are recited in Table 2 below, wherein the values are given for temperature in $°C$ , pressure in atmosphere absolute, heating value in $Kcal/Nm^3$, dust content in $mg/Nm^3$, sulfur compound concentration in ppm and the volume of gas generated in $Nm^3/hr \times 10^9$ respectively.

Table 2

| Position in Fig. 1 | | Line 1 | Line 4 | Line 9 | Line 11 |
|---|---|---|---|---|---|
| Gas Temp. ( °C ) | | 400 ~ 450 | 350 ~ 400 | 250 ~ 300 | 250 ~ 300 |
| Gas Press. (atm abs.) | | 20 ~ 25 | 20 ~ 25 | 20 ~ 25 | 20 ~ 25 |
| Gas Composi- tion (Vol. %) | CO | 24.1 | 19.2 | 3.8 | 4.9 |
| | $CO_2$ | 4.2 | 3.3 | 18.7 | 2.4 |
| | $H_2$ | 8.6 | 6.8 | 22.2 | 28.5 |
| | $H_2O$ | 2.8 | 22.7 | 7.3 | 2.5 |
| | $N_2$ etc. | 60.3 | 48.0 | 48.0 | 61.7 |
| Heating Value ($Kcal/Nm^3$) | | ca. 1,000 | ca. 900 | ca. 800 | ca. 1,000 |
| Dust Cont. ($mg/Nm^3$) | | ca. 10,000 | < 10 | < 10 | < 10 |
| S Compound Conc. (ppm) | | ca. 1,000 | ca. 800 | ca. 800 | < 100· |
| Gas Vol. generated ($Nm^3/hr \times 10^9$) | | 860 | 1,080 | 1,080 | 832 |

From the data of Table 2, it is seen that the values for the content of CO, $CO_2$, dust and sulfur compounds had been decreased markedly, while the content of $H_2O$ was decreased a little and the content of $H_2$ had been increased remarkably.

It should be noted, that the high temperature reducing gases to be treated according to the present invention are not restricted only to the coal gas from a coal gasifier but are inclusive of every high temperature reducing gas containing CO and sulfur compounds.

Example 2

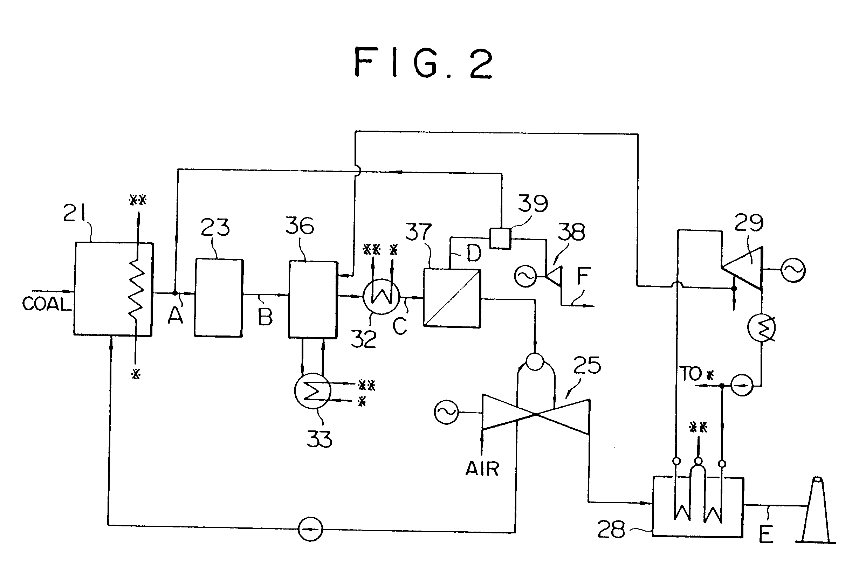

This Example describes an embodiment of the third aspect of the present invention exemplified by the schematic flow diagram of Fig. 2. Here, the same element or constituent part as shown in Fig. 4 is designated with the same numeral symbol as in Fig. 4 and explanation therefor is omitted.

As shown in Fig. 2, the gas generated in a coal gasifier 21 (especially that of compressed air-flowing) is supplied to a gas purifier 23 and is purified here before it is introduced into a CO-shift reactor 36. Into the coal gas is injected a steam from, for example, a middle or low pressure steam extraction of turbine. A $CO_2$ separator 37 is disposed downstream of the CO-shift reactor 36.

The outlet gas of the gas purifier 23 is a combustible gas composed mainly of CO, $H_2$ and $N_2$ (See Table 3, column for the position B), of which composition in the case of air-flowing is typically about 25 % of CO and about 10 % of $H_2$.

This gas is moistened by injecting thereinto a steam from a turbine steam extraction and the thus moistened gas is supplied to a CO-shift reactor 36, where CO is converted into $CO_2$ through a reaction with water by the following reaction scheme:

$$CO + H_2O = CO_2 + H_2 + 9.83 \text{ Kcal/mol}$$

The shift reaction of CO into $CO_2$ is an exothermic raction, so that the reaction will be facilitated if the temperature of reaction mixture is lower as deduced from the equillibrium therefor. In the practice however, the reaction may be conducted advantageously at a temperature of about 300 - 500°C .

In the above reaction equation, the heat balance between the original system side and the product system side is almost unchanged, because only the CO content is replaced by the corresponding amount of $H_2$ after the reaction. In view of the practical operation of fuel combustion, it may be advantageous for the stability of combustion to employ $H_2$ as the combustible fuel component as compared with the use of CO as the combustible fuel component.

The outlet gas of the CO-shift reactor 36 is a combustible gas composed mainly of $H_2$, $CO_2$ and $N_2$ with some CO and $H_2O$ (See Table 3, column for the position C). This gas is supplied to a $CO_2$ separator 27, wherein $CO_2$ is removed from the main stream of the coal gas to be fed to the gas turbine 25, while recovering $CO_2$ from the $CO_2$ separator by means of a suitable $CO_2$ recovery unit. Thus, the fuel gas for the gas turbine consists now mainly of hydrogen and nitrogen in the case of air-flowing and essentially of only hydrogen in the case of oxygen-flowing. Therefore, any formation of $CO_2$ upon operation of a gas turbine is steeply decreased as seen from Table 3, column for the position D of Fig. 2, besides the stability of combustion in the gas turbine combustor to be attained as explained above.

For the $CO_2$ separator 37, there may be employed advantageously those operable on a physical principle on the basis of PSA technique.

The $CO_2$ separated from the main stream of the gas is present in a compressed condition, so that it may be possible to recover therefrom a further energy by employing, for example, a gas expander 38 to attain supplemental power generation. There may be cases requiring no relieving of pressure up to nearly the atmospheric pressure due to the condition of recovery of $CO_2$, such as in the case of recovery as solid (dry ice) or as liquid or in the case of recovery as the raw material for chemical industry, such as methanol synthesis etc.

The employment of $CO_2$ separator 37 based on PSA technique permits to remove residual sulfur compounds, such as $H_2S$, COS etc., which have not been removed in the dry desulfurization unit in the gas purifier 23 and are in a concentration of about 30 - 100 ppm, leaving a clean coal gas (position D of Fig. 2) which is clean enough to be allowed to use even for a fuel cell. The sulfur compounds desorbed from the $CO_2$ separator 37 are collected in a sulfur compound separator 39 and are separated from $CO_2$. The desorbed $CO_2$ free from sulfur compounds is recovered in a highly pure state after it has passed a gas expander 38. The sulfur compounds collected by the sulfur compound separator 39 are returned to the gas purifier 23. A recovery of the heat of reaction in the CO-shift reactor can be attained by installing heat recovery boilers 32, 33 in the CO-shift reactor. The experimental data obtained in Example 2 above are recited in Table 3 bolow, wherein the values given are based on the same units as given in Table 2.

Table 3

| Position in Fig. 2 | | A | B | C | D |
|---|---|---|---|---|---|
| Gas Temp. ( °C ) | | 400 ~ 450 | 400 ~ 450 | 250 ~ 300 | 250 ~ 300 |
| Gas Press. (atm abs.) | | 20 ~ 25 | 20 ~ 25 | 20 ~ 25 | 20 ~ 25 |
| Gas Composition (Vol. %) | CO | 25.7 | 25.2 | 4.0 | 4.8 |
| | $CO_2$ | 3.4 | 3.6 | 18.7 | 1.1 |
| | $H_2$ | 11.1 | 10.9 | 24.5 | 29.8 |
| | $H_2O$ | 3.2 | 3.5 | 8.0 | 9.7 |
| | $N_2$ etc. | 56.4 | 56.1 | 44.8 | 54.6 |
| Heating Value ($Kcal/Nm^3$) | | ca. 1,100 | ca. 1,100 | ca. 900 | ca. 1,100 |
| Dust Cont. ($mg/Nm^3$) | | 3,000 | 10 ~ 30 | 10 ~ 30 | 10 ~ 30 |
| S Compound Conc. (ppm) | | ca. 1,000 | <100 | <100 | < 100 |

Table 3 cont.

| Position in Fig. 1 | | E | F |
|---|---|---|---|
| Gas Temp. ( °C ) | | 100 ~ 130 | <100 |
| Gas Press. (atm abs.) | | 1.03 | 1.03 |
| Gas Composi- tion (Vol. %) | CO | 0 | 0 |
| | $CO_2$ | 1.7 | ≒ 90 |
| | $H_2$ | 0 | 0 |
| | $H_2O$ | 13.4 | 0 |
| | $N_2$ etc. | 84.9 | ≒ 10 |
| Heating Value ($Kcal/Nm^3$) | | 0 | 0 |
| Dust Cont. ($mg/Nm^3$) | | <10 | <10 |
| S Compound Conc. (ppm) | | <50 | <50 |

## Claims

1. A process for purifying high temperature reducing gases by removing sulfur compounds contained in such reducing gases by dry adsorption on adsorbent, comprising subjecting the high temperature reducing gas to a catalytic CO-shift reaction in a reactor having a corresponding catalyst and equipped with a heat recovery means for controlling the reaction gas temperature while injecting steam into said high temperature reducing gas, in order to convert the content of CO in the high temperature reducing gas into $CO_2$, effecting the removal of the sulfur compounds and of $CO_2$ by dry adsorption of them on adsorbent under control of the temperature of the gas by means of the heat recovery means of the reactor and separating the sulfur compounds from $CO_2$ to recover them.

2. A process for purifying high temperature reducing gases as claimed in Claim 1, wherein the sulfur compounds separated from $CO_2$ are supplied to a Claus process sulfur recovery unit, where $H_2S$ in the sulfur compounds is converted into elementary sulfur which is separated and recovered, and the outlet gas of this recovery unit is subjected to reduction by the hydrogen in the gas to convert the other sulfur compounds and the residual elementary sulfur into $H_2S$, whereupon the so formed $H_2S$ is separated and returned to the Claus process sulfur recovery unit.

3. A coal gasification composite power plant with coal gasification having a coal gasifier, a gas purifier for effecting removal of impurities from the coal gas produced in the gasifier, a gas turbine power generation unit having a combustor for combusting the purified coal gas, a waste heat boiler for generating steam by recovering the sensible heat of the gas turbine exhaust gas and a steam turbine power generation unit operated by the steam from the waste heat boiler, comprising a CO-shift reactor for converting CO in the purified coal gas into $CO_2$ disposed between the gas purifier and the combustor of the gas turbine power generation unit, a means for removing $CO_2$ and sulfur compounds from the coal gas in dry system and a sulfur compound separator separating sulfur compounds from $CO_2$.

**Patentansprüche**

1. Ein Verfahren zum Reinigen von Hochtemperatur-Reduktionsgasen durch Entfernen von in solchen Reduktionsgasen enthaltenen Schwefelverbindungen mittels Trockenadsorption an einem Adsorbens, wobei das Hochtemperatur-Reduktionsgas einer katalytischen CO-Konvertierung in einem Reaktor mit einem entsprechenden Katalysator und ausgestattet mit Wärmerückgewinnungseinrichtungen für die Steuerung der Reaktionstenperatur unterworfen wird, während Dampf in das Hochtemperatur-Reaktionsgas injiziert wird, um den Gehalt an CO in Hochtemperatur-Reaktionsgas in $CO_2$ umzuwandeln, wobei die Entfernung der Schwefelverbindungen und des $CO_2$ durch Trockenadsorption von diesen an ein Adsorbens unter Temperaturkontrolle des Gases mittels der Einrichtungen des Reaktors zur Wärmerückgewinnung bewirkt wird und wobei zur Wiedergewinnung die Schwefelverbindungen vom $CO_2$ getrennt werden.

2. Ein Verfahren zum Reinigen von Hochtenperatur-Reduktionsgasen nach Anspruch 1, wobei die von $CO_2$ getrennten Schwefelverbindungen in eine Claus-Schwefel-Rückgewinnungseinrichtung eingespeist werden, in der das in den Schwefelverbindungen enthaltene $H_2S$ in elementaren Schwefel umgewandelt wird, und wobei das Abgas dieser Rückgewinnungseinrichtung einer Reduktion durch den in Gas enthaltenen Wasserstoff unterworfen wird, um die anderen Schwefelver - bindungen und den restlichen elementaren Schwefel in $H_2S$ zu überführen, wonach das so entstandene $H_2S$ abgetrennt und in die Claus-Schwefel-Rückgewinnungseinrichtung zurückgeführt wird.

3. Eine Kohlevergasungskraftanlage mit Kohlevergasung, die einen Kohlevergaser aufweist, einen Gasreiniger zur Entfernung von Verunreinigungen des im Kohlevergaser erzeugten Kohlengases, eine Gasturbinen-Krafterzeugungseinheit mit einem Brenner zur Verbrennung des gereinigten Kohlengases, einen Abwärmekessel für die Dampferzeugung durch- Rückgewinnung der fühlbaren Wärme des Turbinenabgases und eine von Dampf des Abwärmekessels betriebene Dampfturbinenkrafterzeugungseinheit, bestehend aus einem CO-Konvertierungsreaktor für die Umwandlung des CO im gereigten Kohlengas in $CO_2$, angeordnet zwischen dem Gasreiniger und dem Brenner der Gasturbinenkrafterzeugungseinheit, aus einer Einrichtung für die Entfernung von $CO_2$ und Schwefelverbindungen aus den Kohlengas in Trockensystem und aus einem Schwefelverbindungsabscheider, der die Schwefelverbindungen vom $CO_2$ trennt.

**Revendications**

1. Procédé pour l'épuration de gaz réducteurs à haute température, par élimination de composés soufrés contenus dans ces gas réducteurs, par adsorption à sec sur un adsorbant, compenant la soumission du gaz réducteur à haute température à une réaction catalytique de conversion de CO dans un réacteur contenant un catalyseur approprié, et muni d'un moyen de récupération de chaleur pour le réglage de la température du gaz de réaction, tout en injectant de la vapeur dans ledit gaz réducteur à haute température, afin de convertir en $CO_2$ le CO contenu dans le gaz réducteur à haute température, l'exécution de l'élimination des composés soufrés et du $CO_2$ par adsorption à sec de ceux-ci sur un adsorbant, avec réglage de la température du gaz à l'aide du moyen de récupération de chaleur du réacteur, et la séparation des composés soufrés d'avec le $CO_2$ pour les récupérer.

2. Procédé pour l'épuration de gaz réducteurs à haute température selon la revendication 1, dans lequel les composés soufrés séparés du $CO_2$ sont envoyés à une unité de récupération de soufre par le procédé Claus, dans laquelle le $H_2S$ présent dans les composés soufrés est converti en soufre élémentaire qui est séparé et récupéré, et le gaz sortant par le conduit de sortie de cette unité de récupération est soumis à une réduction par l'hydrogène contenu dans le gaz, pour la conversion des autres composés soufrés et du soufre élémentaire résiduel en $H_2S$, à la suite de quoi le $H_2S$ ainsi formé est séparé et renvoyé à l'unité de récupération de soufre par le procédé Claus.

3. Installation intégrée de gazéification de houille, à gazéification de houille comportant un gazéificateur de houille, un épurateur de gaz pour effectuer l'élimination d'impuretés du gaz de houille produit dans le gazéificateur, une unité de production de force motrice de type turbine à gaz, comportant un élément de combustion pour la combustion du gaz de houille épuré, une chaudière de récupération de chaleur perdue, pour la production de vapeur par récupération de la chaleur sensible du gaz sortant par le conduit de sortie de la turbine à gaz, et une unité de production de force motrice de type turbine à vapeur, entraînée par la vapeur provenant de la chaudière de récupération de chaleur perdue, comprenant un convertisseur de CO, pour la conversion en $CO_2$ du CO présent dans le gaz de houille épuré, disposé entre l'épurateur de gaz et l'élément de combustion de l'unité de production de force motrice de type turbine à gaz, un moyen pour l'élimination de $CO_2$ et de composés soufrés du gaz de houille, dans un système sec, et un séparateur de composés soufrés, séparant les composés soufrés d'avec le $CO_2$.

# F I G. I

FIG. 2

FIG. 3

# FIG. 4

EP 0 444 987 B1